# FASCICULE DE BREVET EUROPEEN

(11) **EP 3 728 652 B1**
(45) Date de publication et mention de la délivrance du brevet: **17.04.2024**
(21) Numéro de dépôt: 18833943.6
(22) Date de dépôt: 14.12.2018
(51) Int. Cl.: C21D 1/26, B22F 3/24, B29C 33/00, B33Y 80/00, B22F 5/00, B22F 3/105, C22C 38/12, C22C 38/10, C22C 38/08, C21D 9/00, C21D 6/02, C21D 6/00, B22F 10/64, B22F 10/28

(54) **PROCÉDÉ DE TRAITEMENT THERMIQUE D'UNE PIÈCE EN ACIER MARAGING**
VERFAHREN ZUR WÄRMEBEHANDLUNG EINES WERKSTÜCKS AUS MARTENSITAUSHÄRTENDEM STAHL
METHOD OF THERMAL TREATMET OF A COMPONENT FROM MARAGING STEEL

(30) Priorité: 19.12.2017 FR 1762494
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: VERLEENE, Stéphanie, 63040 Clermont Ferrand Cedex 9 (FR)
(74) Mandataire: M.F.P. Michelin
(86) Numéro de dépôt international: PCT/FR2018/053308
(87) Numéro de publication internationale: WO 2019/122635

(56) Documents cités:
- CN-A- 107 116 224
- DE-A1-102015 202 328
- FR-A1- 2 987 293
- US-A1- 2013 065 073
- ROHRBACH K ET AL: "MARAGING STEELS", 1 janvier 1990 (1990-01-01), PROPERTIES AND SELECTION : IRONS, STEELS & HIGH PERFORMANCE ALLOYS; [METALS HANDBOOK], METALS PARK, OHIO : AMERICAN SOCIETY FOR METALS, US, PAGE(S) 793 - 800, XP002009427, ISBN: 978-0-87170-377-4 le document en entier
- Anonymous: "11 - Steels for aircraft structures", , 1 janvier 2012 (2012-01-01), pages 232-250, XP009512400, DOI: 10.1533/9780857095152.232 ISBN: 978-0-85709-515-2 Extrait de l'Internet: URL:https://www.sciencedirect.com/topics/c hemistry/maraging-steel
- CASATI R ET AL: "Aging Behaviour and Mechanical Performance of 18-Ni 300 Steel Processed by Selective Laser Melting", METALS, M D P I AG, CH, vol. 6, no. 9, 31 août 2016 (2016-08-31), pages 218-1, XP009507657, ISSN: 2075-4701, DOI: 10.3390/MET6090218 [extrait le 2016-09-08]
- MUTUA JAMES ET AL: "Optimization of selective laser melting parameters and influence of post heat treatment on microstructure and mechanical properties of maraging steel", MATERIALS & DESIGN, vol. 139, 21 novembre 2017 (2017-11-21), pages 486-497, XP085321537, ISSN: 0264-1275, DOI: 10.1016/J.MATDES.2017.11.042
- Jelena Milovanovic ET AL: "Metal Laser Sintering for Rapid Tooling in Application to Tyre Tread Pattern Mould" In: "Sintering - Methods and Products", 23 mars 2012 (2012-03-23), IntechOpen Limited, London, UK, XP055502169, ISBN: 978-953-510-371-4 pages 73-90, DOI: 10.5772/35276, le document en entier

## Description

### DOMAINE TECHNIQUE GENERAL

L'invention se situe dans le domaine des pièces en acier maraging, obtenues par fabrication additive, plus précisément par fusion sélective par laser, connue sous l'acronyme "SLM" de l'expression anglaise "Sélective Laser Melting".

L'invention concerne plus précisément le traitement thermique de telles pièces, qui sont destinées à venir ensuite au contact d'aluminium moulé ou injecté.

La divulgation concerne également un procédé de fabrication d'un produit en aluminium, qui est en dehors l'invention revendiquée, qui consiste à couler ou à injecter de l'aluminium autour d'une pièce ayant subi ledit traitement thermique.

Enfin la divulgation trouve une application particulière dans la fabrication d'un moule en aluminium pour la cuisson et la vulcanisation d'un pneumatique où au moins une telle pièce en acier maraging, se présentant sous forme d'une lamelle, est utilisée pour former les rainures de la bande de roulement du pneumatique.

### ETAT DE L'ART

Pour mémoire, on rappelle que la "fusion sélective par laser" est un procédé de fabrication additive, qui consiste à faire fondre et à souder ensemble de fines couches de poudres métalliques, par balayage à l'aide d'un faisceau laser, afin d'obtenir une pièce.

Lors de la mise oeuvre de ce procédé pour la fabrication de pièces en acier maraging, (par exemple les lamelles précitées), des mini-trempes se trouvent réalisées, par augmentation de la température lors de la fusion laser, suivie du refroidissement rapide. Ces mini-trempes ne permettent pas de créer un réseau cristallin clairement défini avec des précipités, c'est à dire une structure de matériau homogène et bien organisée, mais aboutissent au contraire à un état hydride hétérogène avec des ségrégations d'éléments chimiques, c'est-à-dire un appauvrissement et un enrichissement local d'éléments chimiques.

Lors de la fabrication d'un moule de cuisson et de vulcanisation de pneumatiques, un procédé utilisable consiste à fabriquer une première matrice comprenant les sillons de la bande de roulement du futur pneumatique, puis à partir de cette première matrice, à fabriquer un moule de forme inverse en matériau souple (par exemple en silastène), puis à partir de ce moule, une seconde matrice en matériau friable correspondant au profil de pneumatique et enfin à partir de cette seconde matrice, le moule définitif.

Ce moule définitif est obtenu en coulant de l'aluminium autour de lamelles en acier maraging obtenues par le procédé précité de fusion sélective par laser, ces lamelles étant conformées pour épouser la forme des rainures de la bande de roulement. La coulée de l'aluminium autour de ces lamelles provoque une nouvelle montée en température de celles-ci et vient amplifier les ségrégations d'éléments chimiques.

La microstructure non homogène et ces ségrégations rendent la lamelle en acier maraging fragile et cassante, avec notamment une chute de l'allongement du matériau, rendant celui-ci peu résistant, après le passage de la zone de déformation élastique.

On connaît déjà d'après le site www.aircraftmaterials.com/data/nickel/C300.html, un procédé de traitement thermique d'un acier maraging, qui consiste à le chauffer jusqu'à une température de 816°C, puis à faire diminuer la température jusqu'à réaliser un revenu à une température de 482°C pour atteindre un pic de durcissement maximum. Toutefois, un tel traitement a pour effet de rendre l'acier plus fragile encore, ce qui est contraire à l'effet recherché.

On connaît enfin d'après le document FR 2 987 293, un procédé de fabrication d'objets tridimensionnels, ainsi que l'appareil permettant de mettre en oeuvre ce procédé. Ce procédé consiste à déposer une première couche de poudre sur un support, à la fusionner par l'emploi d'un faisceau laser, puis à lui faire subir un traitement thermique. Ce procédé est ainsi répété à chaque couche. Toutefois, outre que ce traitement thermique est appliqué à chaque couche et non au produit fini, il est réalisé dans des gammes de températures de 400°C à 500°C qui ne permettent pas de résoudre les problèmes que l'invention entend résoudre.

### PRESENTATION DE L'INVENTION

L'invention a pour but de résoudre les inconvénients précités de l'état de la technique.

L'invention a pour but de proposer un traitement thermique d'une pièce en acier maraging, obtenue par fusion sélective par laser, (notamment une lamelle), avant sa mise en contact avec de l'aluminium coulé ou injecté, par exemple avant son insertion dans un moule en aluminium de cuisson et de vulcanisation de pneumatiques, ce traitement ayant pour but de la rendre plus ductile et plus résiliente.

A cet effet, l'invention concerne un procédé de traitement thermique d'une pièce en acier maraging obtenue par fusion sélective par laser, ledit acier comprenant un acier comprenant un pourcentage de carbone inférieur ou égal à 0.03%, une teneur en nickel comprise entre 17% et 19%, une teneur en cobalt comprise entre 8.5% et 9.5%, une teneur en molybdène comprise entre 4.5% et 5.2%, une teneur en titane comprise entre 0% et 0.8%, une teneur en aluminium comprise entre 0% et 0.15%, une teneur en chrome comprise entre 0% et 0.5%, une teneur en cuivre comprise entre 0% et 0.5%, une teneur en silicium comprise entre 0% et 0.1%, une teneur en manganèse comprise entre 0% et 0.1%, une teneur en soufre comprise entre 0% et 0.01%, une teneur en phosphore comprise entre 0% et 0.01%, et le reste de fer, tous ces pourcentages étant exprimés en poids par rapport au poids total de la pièce.

Conformément à l'invention, ce procédé comprend les étapes consistant à :
- chauffer ladite pièce en acier maraging depuis la température ambiante T0 jusqu'à une température maximale Tmax comprise entre 600°C et 640°C,
- maintenir ladite température maximale Tmax pendant une durée comprise entre 5 heures et 7 heures,
- refroidir ladite pièce.

Grâce à ces caractéristiques de l'invention, on observe que la pièce en acier maraging ainsi traitée est beaucoup plus ductile, c'est-à-dire qu'elle peut se déformer davantage sans se rompre, beaucoup plus résiliente, c'est-à-dire qu'elle présente une meilleure capacité à absorber l'énergie. Un tel traitement permet également d'augmenter l'allongement de la pièce.

Les modes de réalisation préférés sont définis par les revendications dépendantes.

La divulgation concerne également l'utilisation, qui est en dehors l'invention revendiquée, d'au moins une pièce en acier maraging obtenue par le procédé précité pour la fabrication d'un produit en aluminium.

Cette utilisation comprend les étapes consistant à :
- disposer ladite au moins une pièce en acier maraging dans une empreinte, et
- couler ou injecter de l'aluminium dans ladite empreinte autour de ladite pièce ou desdites pièces en acier maraging, de façon à obtenir ledit produit en aluminium.

De préférence, ledit produit en aluminium est un moule ou segment de moule de cuisson et de vulcanisation d'un pneumatique, ladite pièce en acier maraging est une lamelle de formation des sillons de la bande de roulement dudit pneumatique et on coule l'aluminium autour de ladite ou desdites lamelle(s) pour obtenir ledit moule.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est une vue en perspective d'un exemple de réalisation d'une lamelle en acier de formation des sillons de bandes de roulement pour pneumatiques,
- la figure 2 est un exemple de réalisation d'un moule de cuisson et de vulcanisation de pneumatiques munis d'au moins une des lamelles précitées, et
- la figure 3 est une représentation graphique de l'évolution de la température en fonction du temps, au cours des différentes étapes du procédé de traitement thermique conforme à l'invention.

### DESCRIPTION DETAILLEE DE L'INVENTION

Le procédé de traitement thermique conforme à l'invention vise à traiter une pièce en acier maraging, obtenue par fusion sélective par laser.

L' acier maraging utilisé est un acier comprenant classiquement un pourcentage de carbone inférieur ou égal à 0.03%, une teneur en nickel comprise entre 17% et 19%, une teneur en cobalt comprise entre 8.5% et 9.5%, une teneur en molybdène comprise entre 4.5% et 5.2%, une teneur en titane comprise entre 0% et 0.8%, une teneur en aluminium comprise entre 0% et 0.15%, une teneur en chrome comprise entre 0% et 0.5%, une teneur en cuivre comprise entre 0% et 0.5%, une teneur en silicium comprise entre 0% et 0.1%, une teneur en manganèse comprise entre 0% et 0.1%, une teneur en soufre comprise entre 0% et 0.01%, une teneur en phosphore comprise entre 0% et 0.01%, et le reste de fer, (ces pourcentages étant exprimés en poids par rapport au poids total du produit). Cet acier présente une structure martensitique.

Cet acier présente les propriétés suivantes après traitement thermique de mise en solution puis vieillissement: dureté élevée (>550Hv), bonnes propriétés en traction (Re>1500MPa, Rm>1600MPa) et en fatigue, faible coefficient de dilatation thermique inférieur ou égal à 10,2 x 10-⁶ m/m. °C.

Lorsque cet acier maraging a été obtenu par un procédé de fusion sélective par laser (SLM), c'est-à-dire un procédé de fabrication additive, il présente en outre des propriétés spécifiques brutes de fabrication additive sans post traitement thermique, telles qu'une microstructure très fine (engendré par des gradients thermiques importants liés à ce procédé) qui est bénéfique à certaines propriétés comme la limite d'élasticité (>800MPa), la charge à rupture (>900MPa) et la dureté (>380Hv).

Comme exposé précédemment, un exemple particulier d'application de l'invention est la fabrication d'un moule de cuisson et de vulcanisation d'un pneumatique.

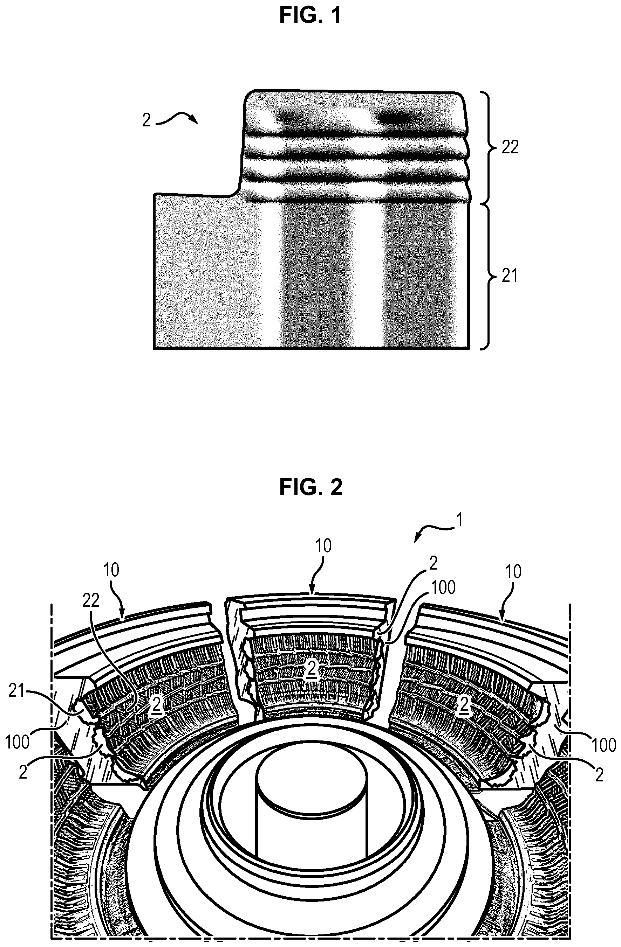

Sur la figure 2, on peut voir un exemple de réalisation d'un tel moule 1 dont seule une partie est représentée. Ce moule 1, de forme générale annulaire, se compose de plusieurs segments10 incurvés, en portion d'anneau et en forme d'arc de cercle, destinés à être assemblés pour former l'ensemble du moule 1. Chaque segment de moule 10 présente sur sa surface intérieure concave plusieurs lamelles 2, conformées de façon à présenter la forme des sillons de la bande de roulement.

En se reportant à la figure 1, on peut voir un exemple de réalisation d'une telle lamelle 2.

La lamelle 2 présente une forme ondulée. Elle comprend deux parties, à savoir une partie 21, dite « intérieure », car destinée à être noyée dans l'aluminium qui constitue l'arrière 100 d'un segment de moule 10 et une partie 22, dite « extérieure », car destinée à faire saillie depuis l'arrière du segment de moule, en direction du centre du moule 1.

C'est donc par exemple cette lamelle 2 en acier maraging obtenue par fusion sélective par laser, qui va subir le traitement thermique conforme à l'invention.

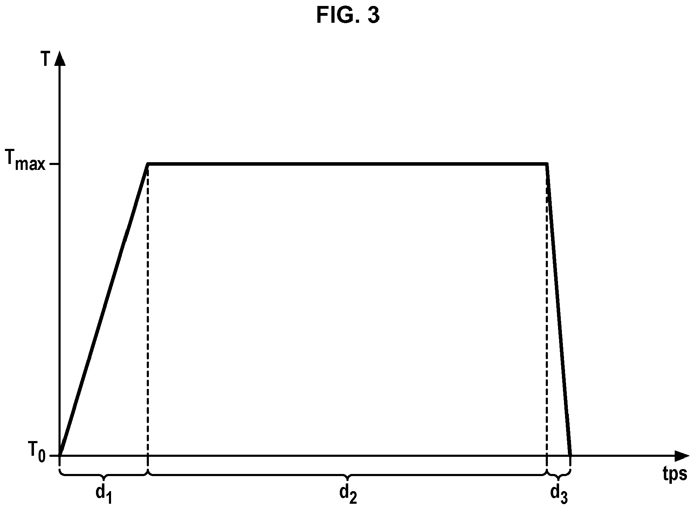

Ce procédé va maintenant être décrit en faisant référence à la figure 3.

Ce traitement thermique est de préférence réalisé en plaçant la pièce en acier maraging à traiter, dans un four sous-vide. Il est également possible d'utiliser un four sous inertage par exemple sous inertage d'argon ou d'azote.

Cette pièce est chauffée pendant une durée de chauffe d₁, au cours de laquelle elle passe de la température ambiante T₀ à une température maximale Tₘₐₓ. Elle est ensuite maintenue à ladite température maximale Tₘₐₓ pendant une durée d₂. Enfin, elle est refroidie rapidement en une durée d₃, au cours de laquelle elle passe de la température maximale Tₘₐₓ à la température T₀ ou sensiblement à T₀.

La vitesse de chauffe V_{c} est égale à (Tₘₐₓ-T₀)/d₁. Cette vitesse de chauffe V_{c} est de préférence comprise entre 5°C/min et 10°C/min, de préférence encore, elle est de 7,5°C/min.

La température initiale T₀ correspond à la température ambiante, soit environ 20°C.

La température maximale Tₘₐₓ est comprise entre 600°C et 640°C, de préférence entre 610°C et 630°C, de préférence encore égale à 620°C.

La durée d₂ du palier de maintien en température de cette température maximale Tₘₐₓ est comprise entre 5 heures et 7 heures, de préférence encore d'une durée de 6 heures ou d'environ 6 heures.

La vitesse de refroidissement Vᵣ est égale à (Tₘₐₓ-T₀)/d₃. Cette vitesse de refroidissement Vᵣ est de préférence comprise entre 420°C/min et 480°C/min, de préférence est comprise entre 440°C/min et 460°C/min, de préférence encore égale à 450°C/min.

Le refroidissement rapide dans le four de traitement thermique sous-vide s'effectue en supprimant le vide, c'est-à-dire sous air ou en injectant des gaz inertes refroidis, tel que par exemple de l'azote et de l'hydrogène, par exemple sous un flux tournant. Ces deux gaz inertes permettent en effet un échange thermique rapide avec la pièce traitée dans le four.

Lorsque le procédé est réalisé dans un four sous inertage, l'ensemble des étapes (montée et descente en température) est réalisé sous une atmosphère de gaz inerte(s).

A l'issue du traitement thermique conforme à l'invention, la pièce en acier maraging obtenue comprend entre 45% et 65% d'austénite et entre 55% et 35% de martensite.

On note en plus la présence résiduelle de précipités de Fe₇Mo₆ et de carbure de M₆C.

Dans ce cas où le traitement thermique précité est appliqué à des lamelles 2 de formation des sillons de bande de roulement, il peut être effectué alors que les lamelles sont encore sur leur plateau de fabrication, ce qui permet d'éviter des déformations. Elles peuvent aussi être détachées et placées dans des paniers allant dans le four.

La divulgation concerne également un procédé de fabrication d'un produit en métal, qui est en dehors l'invention revendiquée, qui comprend les étapes consistant d'une manière générale, à disposer au moins une pièce en acier maraging ayant subi le procédé de traitement thermique précité, dans une empreinte et à couler ou à injecter de l'aluminium, autour de cette pièce, de façon à obtenir ledit produit final.

Dans le cas de la fabrication du moule 1 précité, les lamelles 2 sont placées dans une empreinte, par exemple en plâtre dont la forme est le négatif (image inversée) du moule 1 ou d'un segment 10 de ce moule.

La partie extérieure 22 de chaque lamelle 2 est noyée dans le plâtre. L'empreinte est fermée et l'aluminium est coulé ou injecté dedans. Après refroidissement de l'aluminium, l'empreinte en plâtre est cassée et l'on obtient le moule 1 ou le segment 10 en aluminium, dans lequel la partie intérieure 21 est noyée dans l'aluminium et duquel la partie extérieure 22 des lamelles 2 fait saillie.

Des essais ont été effectués afin de mesurer l'allongement à la rupture A d'une pièce en acier maraging ayant subi les différents procédés. Ces résultats sont résumés dans le tableau 1 ci-dessous.

**Tableau 1**

| **Différentes étapes du procédé auxquelles sont soumises les pièces** | **Allongement à la rupture A (%)** |
|---|---|
| SLM | 6% maxi |
| SLM+ coulée alu | 0,2% à 1,5% |
| SLM+TTH | 6% maxi |
| SLM+TTH+ coulée alu | 5% maxi |

| | |
|---|---|
| *SLM*=*piéce en acier maraging obtenu à l'issue d'un procédé de fusion sélective par laser (SLM).* *TTH = traitement thermique conforme à l'invention.* *Coulée alu* = *coulée avec de l'aluminium réalisé à une température d'environ 750°C* | |

Les résultats du tableau 1 montrent l'effet positif du traitement thermique sur le comportement en fatigue de la pièce.

On constate en effet que si le traitement de coulée aluminium est réalisé directement après que la pièce en acier maraging ait été obtenue par le traitement SLM, sans le traitement thermique de l'invention, (ligne 2 du tableau), l'allongement a la rupture A est fortement réduit.

Au contraire, le traitement thermique conforme à l'invention permet de conserver l'allongement en rupture A identique ou sensiblement identique à ce qu'il était sur la pièce d'origine telle qu'obtenue à l'issue du traitement de fusion sélective par laser. En outre, lorsque la coulée aluminium est réalisé après le traitement thermique conforme à l'invention, on observe que l'allongement à la rupture A est simplement légèrement réduit par rapport à sa valeur d'origine.

Des essais complémentaires réalisés sur les propriétés de traction limite d'élasticité et de charge à la rupture montrent que ces valeurs restent au minimum équivalentes à celles obtenues sur la pièce obtenue par SLM, si le traitement thermique conforme à l'invention est réalisé entre l'étape d'obtention précitée et la coulée de l'aluminium.

Le procédé de traitement thermique conforme à l'invention présente également un impact bénéfique sur la tenue aux chocs des pièces obtenues.

## Revendications

1. Procédé de traitement thermique d'une pièce (2) en acier maraging obtenue par fusion sélective par laser, ledit acier comprenant un pourcentage de carbone inférieur ou égal à 0.03%, une teneur en nickel comprise entre 17% et 19%, une teneur en cobalt comprise entre 8.5% et 9.5%, une teneur en molybdène comprise entre 4.5% et 5.2%, une teneur en titane comprise entre 0% et 0.8%, une teneur en aluminium comprise entre 0% et 0.15%, une teneur en chrome comprise entre 0% et 0.5%, une teneur en cuivre comprise entre 0% et 0.5%, une teneur en silicium comprise entre 0% et 0.1%, une teneur en manganèse comprise entre 0% et 0.1%, une teneur en soufre comprise entre 0% et 0.01%, une teneur en phosphore comprise entre 0% et 0.01%, et le reste de fer, tous ces pourcentages étant exprimés en poids par rapport au poids total de la pièce, **caractérisé en ce qu'**il comprend les étapes consistant à :
- chauffer ladite pièce (2) en acier maraging depuis la température ambiante T₀ jusqu'à une température maximale Tₘₐₓ comprise entre 600° C et 640° C,
- maintenir ladite température maximale Tₘₐₓ pendant une durée comprise entre 5 heures et 7 heures,
- refroidir ladite pièce.

2. Procédé selon la revendication 1, **caractérisé en ce que** la température maximale Tₘₐₓ est comprise entre 610°C et 630°C, de préférence égale à 620°C.

3. Procédé selon la revendication 1 ou 2, **caractérisé en ce que** ladite température maximale Tₘₐₓ est maintenue pendant une durée de 6 heures.

4. Procédé selon l'une des revendications précédentes, **caractérisé en ce que** la vitesse de refroidissement Vᵣ est comprise entre 420°C/min et 480°C/min.

5. Procédé selon la revendication 4, **caractérisé en ce que** la vitesse de refroidissement Vᵣ est comprise entre 440° C/min et 460° C/min, de préférence égale à 450°C/min.

6. Procédé selon l'une des revendications précédentes, **caractérisé en ce que** la vitesse de chauffe V_{c} est comprise entre 5°C/min et 10°C/min, de préférence est de 7,5°C/min.

7. Procédé selon l'une des revendications précédentes, **caractérisé en ce qu'**il est réalisé dans un four sous vide.

8. Procédé selon l'une des revendications précédentes, **caractérisé en ce que** le refroidissement est réalisé sous un flux tournant de gaz inertes refroidis ou sous air.

9. Procédé selon l'une des revendications précédentes, **caractérisé en ce que** ladite pièce en acier maraging (2) est une lamelle de formation des sillons de bande de roulement pour un moule de cuisson et de vulcanisation de pneumatiques.

## Patentansprüche

1. Verfahren zur Wärmebehandlung eines Werkstücks (2) aus martensitaushärtendem Stahl, das durch selektives Laserschmelzen erhalten wird, wobei der Stahl einen prozentualen Kohlenstoffanteil kleiner oder gleich 0,03 %, einen Nickelgehalt zwischen 17 % und 19 %, einen Kobaltgehalt zwischen 8,5 % und 9,5 %, einen Molybdängehalt zwischen 4,5 % und 5,2 %, einen Titangehalt zwischen 0 % und 0,8 %, einen Aluminiumgehalt zwischen 0 % und 0,15 %, einen Chromgehalt zwischen 0 % und 0,5 %, einen Kupfergehalt zwischen 0 % und 0,5 %, einen Siliciumgehalt zwischen 0 % und 0,1 %, einen Mangangehalt zwischen 0 % und 0,1 %, einen Schwefelgehalt zwischen 0 % und 0,01 %, einen Phosphorgehalt zwischen 0 % und 0,01 % und als Rest Eisen umfasst, wobei alle diese prozentualen Anteile als Gewicht bezogen auf das Gesamtgewicht des Werkstücks angegeben sind, **dadurch gekennzeichnet, dass** es die in Folgendem bestehenden Schritte umfasst:
- Erhitzen des Werkstücks (2) aus martensitaushärtendem Stahl von der Umgebungstemperatur T₀ bis auf eine Maximaltemperatur Tₘₐₓ zwischen 600 °C und 640 °C,
- Halten der Maximaltemperatur Tₘₐₓ während einer Dauer zwischen 5 Stunden und 7 Stunden,
- Abkühlen des Werkstücks.

2. Verfahren nach Anspruch 1, **dadurch gekennzeichnet, dass** die Maximaltemperatur Tₘₐₓ zwischen 610 °C und 630 °C beträgt, bevorzugt gleich 620 °C ist.

3. Verfahren nach Anspruch 1 oder 2, **dadurch gekennzeichnet, dass** die Maximaltemperatur Tₘₐₓ während einer Dauer von 6 Stunden gehalten wird.

4. Verfahren nach einem der vorhergehenden Ansprüche, **dadurch gekennzeichnet, dass** die Abkühlgeschwindigkeit Vᵣ zwischen 420 °C/min und 480 °C/min beträgt.

5. Verfahren nach Anspruch 4, **dadurch gekennzeichnet, dass** die Abkühlgeschwindigkeit Vᵣ zwischen 440 °C/min und 460 °C/min beträgt, bevorzugt gleich 450 °C/min ist.

6. Verfahren nach einem der vorhergehenden Ansprüche, **dadurch gekennzeichnet, dass** die Erhitzungsgeschwindigkeit V_{c} zwischen 5 °C/min und 10 °C/min beträgt, bevorzugt gleich 7,5 °C/min ist.

7. Verfahren nach einem der vorhergehenden Ansprüche, **dadurch gekennzeichnet, dass** es in einem Ofen unter Vakuum ausgeführt wird.

8. Verfahren nach einem der vorhergehenden Ansprüche, **dadurch gekennzeichnet, dass** das Abkühlen unter einem rotierenden Strom gekühlter inerter Gase oder unter Luft ausgeführt wird.

9. Verfahren nach einem der vorhergehenden Ansprüche, **dadurch gekennzeichnet, dass** das Werkstück aus martensitaushärtendem Stahl (2) eine Lamelle zur Bildung der Laufstreifenrillen für eine Koch- und Vulkanisationsform für Reifen ist.

## Claims

1. Method for the heat treatment of a part (2) made of maraging steel which part is obtained by selective laser melting, the said steel comprising a percentage of carbon less than or equal to 0.03%, a nickel content of between 17% and 19%, a cobalt content of between 8.5% and 9.5%, a molybdenum content of between 4.5% and 5.2%, a titanium content of between 0% and 0.8%, an aluminium content of between 0% and 0.15%, a chromium content of between 0% and 0.5%, a copper content of between 0% and 0.5%, a silicon content of between 0% and 0.1%, a manganese content of between 0% and 0.1%, a sulfur content of between 0% and 0.01%, a phosphorus content of between 0% and 0.01%, the remainder being iron, all these percentages being expressed by weight with respect to the total weight of the part, **characterized in that** it comprises the steps of:
- heating the said part (2) made of maraging steel from ambient temperature T₀ to a maximum temperature Tₘₐₓ of between 600°C and 640°C,
- maintaining the said maximum temperature Tₘₐₓ for a duration of between 5 hours and 7 hours,
- cooling the said part.

2. Method according to Claim 1, **characterized in that** the maximum temperature Tₘₐₓ is comprised between 610°C and 630°C, and preferably equal to 620°C.

3. Method according to Claim 1 or 2, **characterized in that** the said maximum temperature Tₘₐₓ is maintained for a duration of 6 hours.

4. Method according to one of the preceding claims, **characterized in that** the rate of cooling V_{c} is comprised between 420°C/min and 480°C/min.

5. Method according to Claim 4, **characterized in that** the rate of cooling V_{c} is comprised between 440°C/min and 460°C/min, and preferably equal to 450°C/min.

6. Method according to one of the preceding claims, **characterized in that** the rate of heating Vₕ is comprised between 5°C/min and 10°C/min, and is preferably 7.5°C/min.

7. Method according to one of the preceding claims, **characterized in that** it is carried out in a vacuum furnace.

8. Method according to one of the preceding claims, **characterized in that** the cooling is carried out under a rotating flow of cooled inert gases or under air.

9. Method according to one of the preceding claims, **characterized in that** the said part (2) made of maraging steel is a thin blade for forming tread grooves for a tyre curing and vulcanizing mould.
